# EUROPÄISCHE PATENTSCHRIFT

(11) **EP 0 599 441 B1**
(45) Veröffentlichungstag und Bekanntmachung des Hinweises auf die Patenterteilung: **28.08.1996**
(21) Anmeldenummer: 93250326.1
(22) Anmeldetag: 25.11.1993
(51) Int. Cl.: F03D 3/06, F03D 3/04

(54) **Gekapselte Windkraftmaschine mit aussermittiger Rotorachse und definierter Windführung**
Enclosed wind power machine with eccentric rotor axis and concentrating doors
Eolienne carénée avec axe de rotor excentrique et portes de convergence

(30) Priorität: 25.11.1992 DE 4240248
(43) Veröffentlichungstag der Anmeldung: 01.06.1994
(73) Patentinhaber: MRASEK, Wilhelm, D-2190 Cuxhaven (DE)
(72) Erfinder: MRASEK, Wilhelm, D-2190 Cuxhaven (DE)
(74) Vertreter: Scholz, Hartmut, Dipl.-Ing. Patentanwalt

(56) Entgegenhaltungen:
- EP-A- 0 354 022
- DE-A- 2 444 803
- DE-A- 3 315 439
- DE-A- 3 500 012
- FR-A- 1 047 691
- FR-A- 1 098 995
- GB-A- 721 926
- GB-A- 2 185 786
- US-A- 4 017 204
- US-A- 4 234 289
- US-A- 4 388 041
- US-A- 4 392 780
- US-A- 4 457 669
- US-A- 5 083 899

## Beschreibung

Die Erfindung betrifft eine Windkraftmaschine mit einem Gehäuse, in dem ein Vertikalrotor um eine außermittig stehende Rotorachse drehbar ist, dem Vertikalrotor relativ zu der Rotorachse verschiebbare, während der Umdrehung des Vertikalrotors um Aufwickelachsen ein- und ausrollbare, an Rotordreharmen gehaltene von Wind beaufschlagbare Mittel zugeordnet sind und das Gehäuse luvseitig eine Windaustrittsöffnung und leeseitig eine sich zum Gehäuseinnenraum hin verjüngende, mit Türflügeln verschließbare Windeintrittsöffnung aufweist.

Mit einer derartigen Windkraftmaschine, wie sie aus der DE 35 00 012 C2 bekannt ist, soll die in der Natur vorhandene Windenergie in technisch nutzbare Energie, beispielsweise in elektrische Energie umgewandelt werden. Dabei sind die zu erzielenden Wirkungsgrade von der Windgeschwindigkeit und der Windmenge, die durch die vom Wind beaufschlagbaren Mittel aufgenommen werden kann, abhängig. Es hat sich gezeigt, daß der Gedanke, dem Wind eine möglichst große Auftrefffläche entgegenzusetzen, die dann durch Ausweichen die Drehbewegung erzeugt, nur begrenzte Wirkungsgrade zuläßt.

Aufgabe der vorliegenden Erfindung ist es, eine Windkraftmaschine der Eingangs beschriebenen Art zu schaffen, die einen verbesserten Wirkungsgrad aufweist.

Gelöst wird diese Aufgabe dadurch, daß die der Windeintrittsöffnung zugeordneten Türflügel trag-flächenförmig profiliert sind, die von Wind beaufschlagbaren Mittel an ihren der Rotorachse zugewandten Bereichen mit Winddurchlässen versehen sind und die Rotordreharmen an ihren äußeren freien Enden mit Windleitprofilen versehen sind. Durch diese Maßnahmen wird eine Windkraftmaschine geschaffen, die nach dem Auftriebsprinzip arbeitet, bei dem durch die Profilierung der Segel zusätzlich zu dem Druck des Windes ein Sog erzeugt wird. Dadurch wird der Wind an der Profiloberseite beschleunigt und es kann eine größere Menge der vorhandenen kinetischen Energie in Drehbewegung umgesetzt werden als dies bei dem bisher angewandten sog. Widerstandsprinzip der Fall war.

Zur Verringerung der Reibung des Windes an den Oberflächen der Türflügel ist es vorgesehen, daß die Innenoberflächen der Türflügel mit Laminarblättern besetzt sind. Durch diese Maßnahmen wird eine gezielte Turbulenz unmittelbar auf der Oberfläche der Türflügel erzeugt. Auf diesen Turbulenzen kann der Hauptteil des Windes mit einem wesentlich geringeren Widerstand einströmen. Dadurch kommt es zu einer zusätzlichen Beschleunigung des Windes. Nach dem gleichen Prinzip lassen sich derartige Laminarblätter auch auf den Tragflächen von Flugzeugen installieren, durch die deren Luftwiderstand erheblich verringert wird.

Zur Vororientierung des auf die Windkraftmaschine zuströmenden Windes, ist es vorgesehen, daß den Türflügeln Ionenkammern zugeordnet sind. Durch diese Maßnahmen kann dem Wind ein gezielter Ionenstrom entgegen geleitet werden. Diese Ionisierung der Luft bewirkt, daß sich der Wind vororientiert und mit einem größeren Druck in die Windkraftmaschine einströmen kann.

Der in die Windkraftmaschine eingeströmte Wind muß wieder ausströmen können, dazu hat es sich als wirkungsvoll erwiesen, daß die Innenkanten der Segel mit Winddurchlässen gegenüber der Rotorachse freiliegen und der Windaustrittsöffnung profilierte Saugschlitze zugeordnet sind. Durch diese Maßnahmen kann der Wind innen an den Segeln vorbeiströmen, so daß die Segel nach dem Auftqriebsprinzip arbeiten und den Vertikalrotor mit einer wesentlich höheren Geschwindigkeit in Drehbewegung setzen.

Weitere vorteilhafte Maßnahmen sind in den übrigen Unteransprüchen beschrieben. Die Erfindung ist anhand eines Ausführungsbeispieles in der beiliegenden Zeichnung dargestellt und wird nachfolgend näher beschreiben; es zeigt:
- **Figur 1**: die Seitenansicht einer auf einem Gebäude installierten, gekapselten und mit Vertikaltürflügel versehenen Wind-kraftmaschine;
- **Figur 2**: die Draufsicht auf eine Windkraftmaschine nach der Figur 1, mit in den Vertikaltürflügeln vorgesehenen Ionenkammern;
- **Figur 3**: den Schnitt entlang der Linie B-B in der Figur 2;
- **Figur 4**: eine Windkraftmaschine nach den Figuren 1 und 2, geschnitten entlang der Linie A-A in der Figur 3;
- **Figur 5**: eine Windkraftmaschine nach der Figur 3, mit oben und unten anscharnierten Horizontaltürflügeln;
- **Figur 6**: der Schnitt entlang der Linie V-V in der Figur 5;
- **Figur 7**: die Detaildarstellung eines Laminarblattes entsprechend dem Ausschnitt "L" in der Figur 4;
- **Figur 7a**: die Draufsicht auf den Ausschnitt "L" nach der Figur 7;
- **Figur 8**: die Detaildarstellung eines Laminarblattes entsprechend dem Ausschnitt "A" in der Figur 7;
- **Figur 8a**: die Draufsicht auf ein Laminarblatt nach der Figur 8.

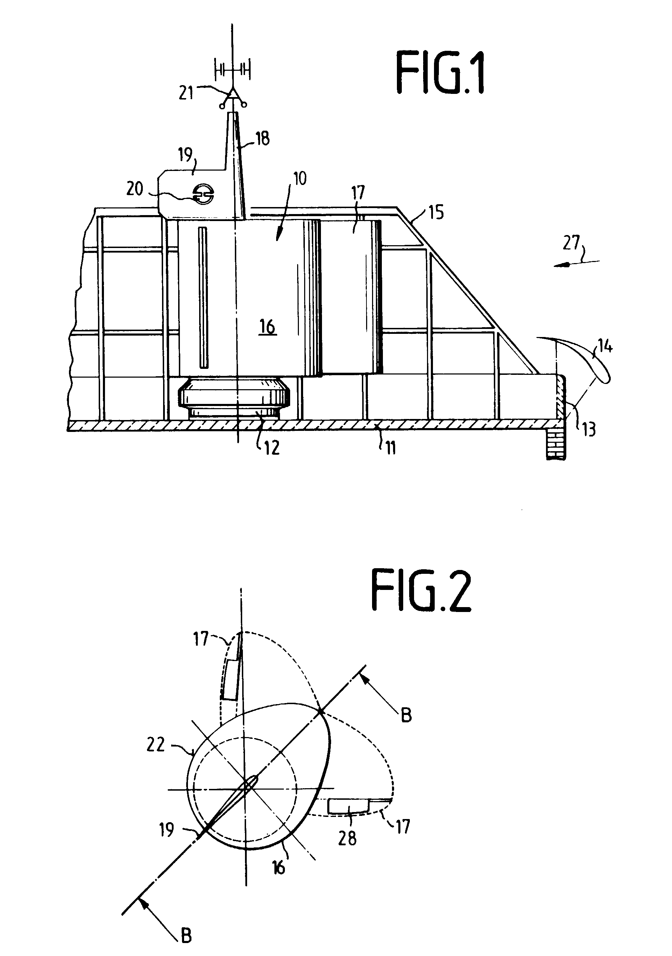

Die in den Figuren 1 und 2 dargestellte Windkraftmaschine 10 besteht im wesentlichen aus einem Gehäuse 16 mit einem Aufsatzmast 18 die über ein Brüstungselement 13 mit einem Dach- oder Treppenhauskopf 11 eines nicht näher dargestellten Wohnhauses verbunden ist. Der Aufsatzmast 18 ist mit einem Windleitrad 19, einem Windrad 20 und einem Fliehkraftregler 21 versehen und einstückig mit dem Gehäuse 16 verbunden. Das Gehäuse 16 ist, wie die Figur 2 zeigt, mit beidseitig anscharnierten Vertikaltürflügeln 17 versehen und auf einem Drehkranz 12 drehbar angeordnet.

Die Windkraftmaschine 10 ist zum Aufbau auf dem Dach 15 eines nicht näher dargestellten Gebäudes vorgesehen, kann aber auch an jedem beliebigen anderen hochgestellten Platz aufgestellt werden. Zur besseren Einleitung des Windes kann dem Brüstungselement 13 bzw. dem Dach 15 ein profilierter Vorflügel 14 zugeordnet sein. Der Vorflügel 14 ist, wie die Figur 1 zeigt, im Querschnitt tragflächenförmig profiliert. Wie die Figur 2 zeigt, ist das Gehäuse 16 in Draufsicht symmetrisch-eiförmig ausgebildet, wobei die Spitze dem Wind zugekehrt ist.

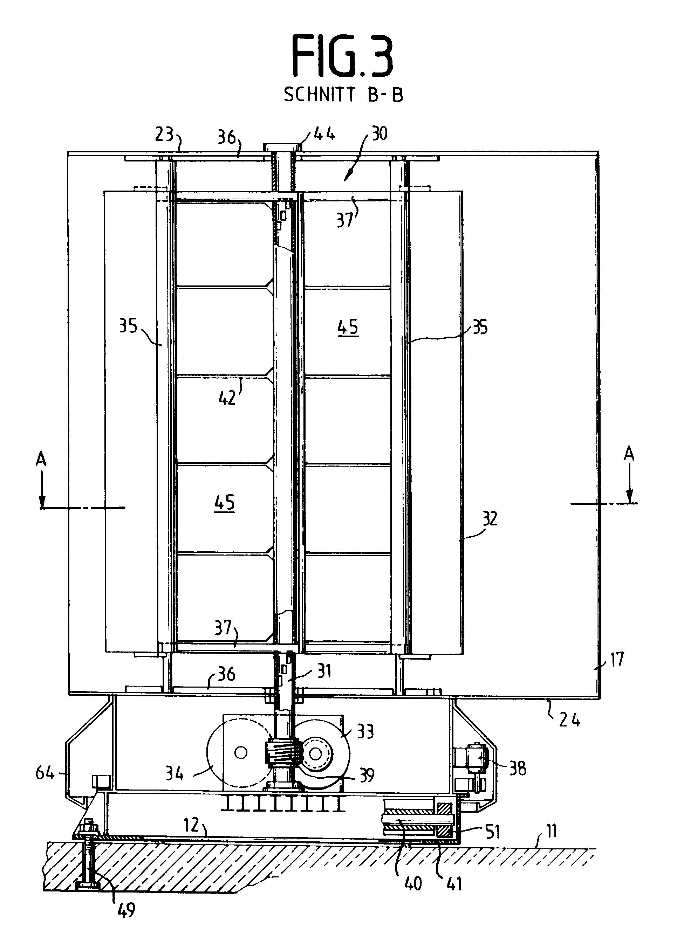

Das Gehäuse 16 weist eine senkrechte Gehäusewand 22 auf, die, wie die Figur 3 zeigt, mit einer oberen Gehäuseabdeckung 23 und mit einer unteren Gehäuseabdeckung 24 versehen ist. Die Windeintrittsöffnung 25 ist an der spitzeren Seite des Gehäuses 16 vorgesehen und kann durch beidseitig in Türscharnieren 63 anscharnierte, automatisch betätigte Vertikaltürflügel 17 geöffnet und geschlossen werden.

In dem Gehäuse 16 sind an den Gehäuseabdeckungen 23 und 24 Profilbahnen 36 befestigt, an denen Rotordreharme 37 umlaufen können. Der Vertikalrotor 30 weist dazu beidendig Rotorköpfe 44 auf, die mit Dreharmführungen 46 versehen sind. In dem Gehäuseinnenraum 58 des Gehäuses 16 ist ein Vertikalrotor 30 angeordnet, der mit einer vertikal stehenden Rotorachse 31 versehen ist. Der Rotorachse 31 sind flexible Segel 32 als vom Wind 27 beaufschlagbare Mittel zugeordnet.

Die Segel 32 sind radial außen mit Aufwickelachsen 35 verbunden und radial innen über Ketten- oder Drahtgeflechtelemente 42 mit der Rotorachse 31 verbunden. Die Innenkanten 59 der Segel 32 sind mit einem vorbestimmten Abstand zu der Rotorachse 31 an dieser befestigt, wodurch mittige Winddurchlässe 45 entstehen. Der Wind 27 kann dadurch an den bauchigen Segeln 32 vorbeistreichen und einen, einem Hoch-am-Windkurs vergleichbaren Auftrieb erzeugen.

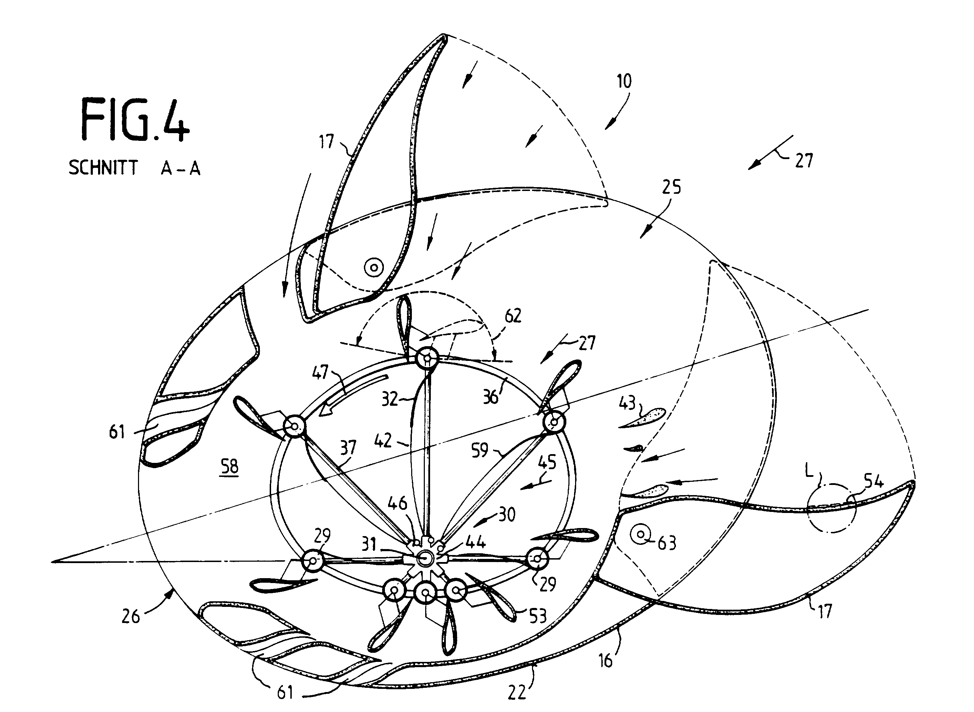

Wie die Figur 4 weiter zeigt, weisen die Aufwickelachsen 35 relativ große Durchmesser auf. Die Segel 32 können dadurch während einer jeden Umdrehung des Vertikalrotors 30 sehr schnell auf- und abgewickelt werden. Die Durchmesser der Aufwickelachsen 35 sind dabei so bemessen, daß sie nur ein bis zwei Umdrehungen während eines Umlaufes in Drehrichtung 47 des Vertikalrotors 30 benötigen, um die Segel 32 ganz auf- bzw. abzuwickeln. Den Aufwickelachsen 35 sind dazu schnell laufende, reversierbare Elektormotoren 29 zu-geordnet.

Radial außen sind an den Rotordreharmen 37 den Aufwickelachsen 35 zugeordnete Windleitprofile 53 angeordnet. Die Windleitprofile 53 verlaufen entlang der gesamten Länge einer Aufwickelachse 35 und sind ebenfalls tragflächenförmig profiliert. An ihren Leeseiten entsteht dadurch ein Überdruck und an ihren Luvseiten ein Unterdruck. Die Anstellwinkel 62 der Windleitprofile 53 werden während einer Umdrehung des Vertikalrotors 30 kontinuierlich nachgestellt.

In der Windeintrittsöffnung 25 sind zusätzliche tragflächenförmig profilierte Leitlamellen 43 angeordnet. Zur Strömungsführung sind in der Gehäuseaußenwandung 22 im Bereich der Windaustrittsöffnung 26 profilierte Saugschlitze 61 vorgesehen. Der Wind 27 kann durch die Windeintrittsöffnung 25 in das Gehäuse 16 einfallen, wird im Gehäuseinnenraum 58 beschleunigt, kann durch die Winddurchlässe 45 an den Segeln 32 vorbeiströmen und durch die Windaustrittsöffnung 26 und die Saugschlitze 61 wieder austreten.

Wie die Figur 3 weiter zeigt, befindet sich unter dem Gehäuse 16 ein Getriebegehäuse 64, in dem ein mit dem Vertikalrotor 30 verbundener Generator 33, eine Bremse 34 und ein mit der Rotorachse 31 verbundenes Getriebe 39 untergebracht sind. Die Windkraftmaschine 10 läuft auf dem Drehkranz 12 in Rollen 51 rundum und kann durch einen Elektromotor 38 gestellt werden. Die Rollen 51 sind mit Rollenachsen 40 versehen und laufen in Rollenführungen 41 in dem Drehkranz 12 rundum. Das Getriebegehäuse 64 und damit die gesamte Windkraftmaschine 10 ist mit Verbindungselementen 49 mit dem Treppenhauskopf 11 verbunden.

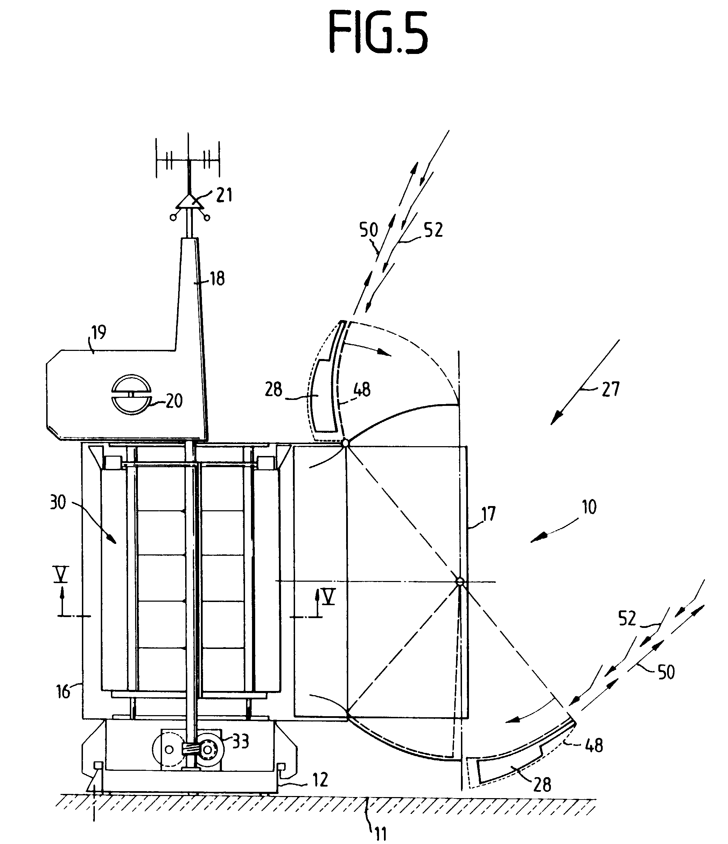

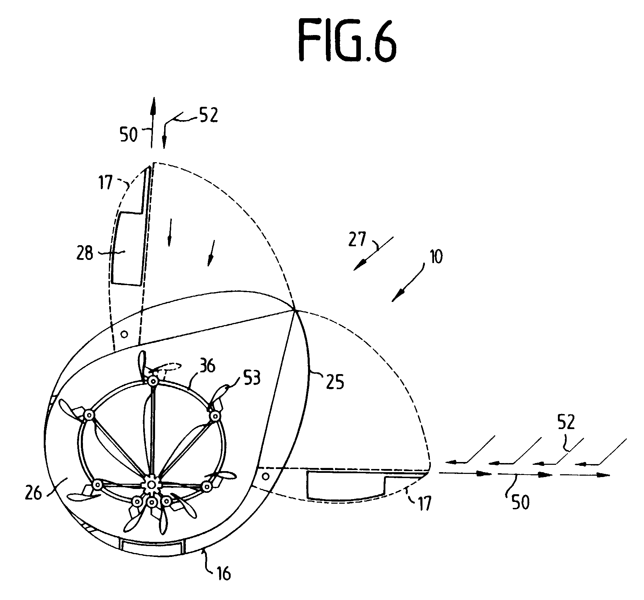

Wie die Figuren 5 und 6 zeigen, kann die Windeintrittsöffnung 26 auch durch Horizontaltürflügel 48 versehen sein. Bei der hier gezeigten Ausführung sind den Türflügeln 17 bzw. 48 Ionenkammern 28 zugeordnet, in denen Luft ionisiert wird. Diese ionisierte Luft kann in einem Ionenstrom 50 dem Wind 27 entgegengesandt werden. Durch die aus den Ionenkammern 28 austretenden Ionenströme 50 wird der Wind 27 in einen orientierten Luftstrom 52 umgewandelt, der quasi wie ein Trichter eine Vororientierung und Beschleunigung des Windes 27 auf die Windkraftmaschine 10 zu erzeugt. Durch die Horizontaltürflügel 48 können so Fallwinde in die Windkraftmaschine 10 eingeleitet und zum Antrieb des Vertikalrotors 30 genutzt werden.

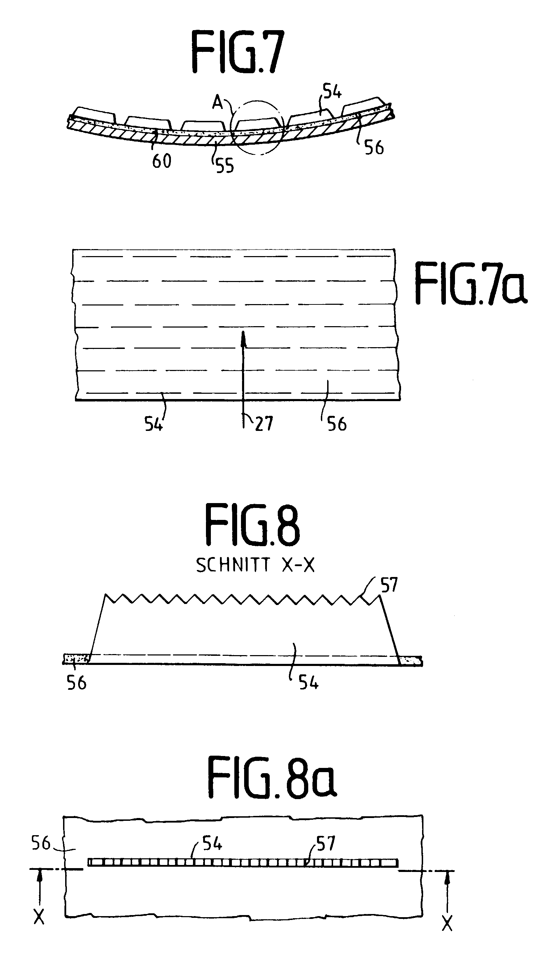

Zur Verbesserung der Strömung sind auf den Türinneoberflächen 55 der Türflügel 17 bzw. 48 und an den Windleitprofilen 53 erfindungsgemäße Laminarblätter 54 vorgesehen, wie sie in den Figuren 7 und 7a im Detail als Ausschnitt "L" aus der Figur 4 dargestellt sind. Die Laminarblätter 54 stehen quer zum Wind 27 und können von diesem umgelegt werden. Sie sind in Befestigungskanten 60 einstückig an eine Kunststoffschicht 56 angeformt und über diese einseitig festgelegt, mit der Türinnenoberfläche 55 verbunden.

Wie die Figuren 8 und 8a zeigen, sind die den Befestigungskanten 60 gegenüberliegenden freien Kanten der Laminarblätter 54 mit Zahnungen 57 versehen. Die Laminarblätter 57 sind dünn und äußerst flexibel. Sie liegen schuppenartig übereinander und erzeugen mit den Zahnungen 57 an ihren Luvseiten kleine Verwirbelungen, auf denen der einstreichende Wind 27 eine weitaus verringerte Angriffsfläche findet. Der dem Wind 27 entgegengesetzte Strömungswiderstand wird dadurch wesentlich verringert. Eben solche Laminarblätter lassen sich auch auf den Tragflächen von Flugzeugen oder an den Windleitprofilen 53 anbringen.

### Bezugszeichen

- 10: Windkraftmaschine
- 11: Treppenhaushof
- 12: Drehkranz
- 13: Brüstungselement
- 14: Vorflügel
- 15: Dach
- 16: Gehäuse
- 17: Vertikaltürflügel
- 18: Aufsatzmast
- 19: Windleitwerk
- 20: Windrad
- 21: Fliehkraftregler
- 22: Gehäuseaußenwand
- 23: Gehäuseabdeckung, oben
- 24: Gehäuseabdeckung, unten
- 25: Windeintrittsöffnung
- 26: Windaustrittsöffnung
- 27: Wind
- 28: Ionenkammer
- 29: Elektromotor
- 30: Vertikalrotor
- 31: Rotorachse
- 32: Segel
- 33: Generator
- 34: Bremse
- 35: Aufwickelachse
- 36: Profilbahn
- 37: Rotordreharm
- 38: Elektromotor
- 39: Getriebe
- 40: Rollenachse
- 41: Rollenführung
- 42: Kettenelement
- 43: Leitlamelle
- 44: Rotorkopf
- 45: Winddurchlaß
- 46: Dreharmführung
- 47: Drehrichtung
- 48: Horizontaltürflügel
- 49: Verbindungselement
- 50: Ionenstrom
- 51: Rolle
- 52: orientierter Luftstrom
- 53: Windleitprofil
- 54: Laminarblatt
- 55: Türinnenoberfläche
- 56: Kunststoffschicht
- 57: Zahnung
- 58: Gehäuseinnenraum
- 59: Segelinnenkanten
- 60: Befestigungskante
- 61: Saugschlitze
- 62: Anstellwinkel
- 63: Türcharnier
- 64: Getriebegehäuse

## Patentansprüche

1. Windkraftmaschine mit einem Gehäuse (16), in dem ein Vertikalrotor (30) um eine außermittig stehende Rotorachse (31) drehbar ist, dem Vertikalrotor (30) relativ zu der Rotorachse (31) verschiebbare, während der Umdrehung des Vertikalrotors um Aufwickelachsen ((35) ein- und ausrollbare, an Rotordreharmen (37) gehaltene von Wind beaufschlagbare Mittel (32) zugeordnet sind und das Gehäuse (16) luvseitig eine Windaustrittsöffnung (26) und leeseitig eine sich zum Gehäuseinnenraum (58) hin verjüngende, mit Türflügeln (17) verschließbare Windeintrittsöffnung (25) aufweist, dadurch gekennzeichnet, daß die der Windeintrittsöffnung (25) zugeordneten Türflügel (17, 48) tragflächenförmig profiliert sind, die von Wind beaufschlagbaren Mittel (32) an ihren der Rotorachse (31) zugewandten Bereichen mit Winddurchlässen (45) versehen sind und die Rotordreharme (37) an ihren äußeren freien Enden mit Windleitprofilen (53) versehen sind.

2. Windkraftmaschine nach Anspruch 1, dadurch gekennzeichnet, daß die den Rotordreharmen (37) zugeordneten Aufwickelachsen (35) einen Umfang aufweisen, der dem 0,25 bis 1fachen der aufzuwickelnden Länge der von Wind beaufschlagbaren Mittel (32) entspricht.

3. Windkraftmaschine nach den Ansprüchen 1 und 2, dadurch gekennzeichnet, daß die von Wind beaufschlagbaren Mittel (32) an flexiblen Drahtgeflecht- oder Kettenelementen (42) an der Rotorachse (31) gehaltene Segel (32) sind.

4. Windkraftmaschine nach den Ansprüchen 1 bis 3, dadurch gekennzeichnet, daß die Innenkanten (59) der Segel (32) mit Winddurchlässen (45) gegenüber der Rotorachse (31) freiliegen.

5. Windkraftmaschine nach den Ansprüchen 1 bis 4, dadurch gekennzeichnet, daß die Innenoberflächen (55) der Türflügel (17, 48) mit Laminarblättern (54) besetzt sind.

6. Windkraftmaschine nach den Ansprüchen 1 bis 5, dadurch gekennzeichnet, daß die Laminarblätter (54) aus einem leicht biegsamen, flexiblen Material bestehen, die mit einer Befestigungskante (60) einseitig auf einer sie tragenden Beschichtung (56) befestigt sind.

7. Windkraftmaschine nach den Ansprüchen 1 bis 6, dadurch gekennzeichnet, daß die den Befestigungskanten (60) gegenüberliegenden Enden der Laminarblätter (54) mit einer Zahnung (57) versehen sind.

8. Windkraftmaschine nach den Ansprüchen 1 bis 7, dadurch gekennzeichnet, daß den Türflügeln (17, 48) Ionenkammern (28) zugeordnet sind.

9. Windkraftmaschine nach den Ansprüchen 1 bis 8, dadurch gekennzeichnet, daß den Türflügeln (17, 48) des Gehäuses (16) ein Vorflügel (14) vorgeordnet ist.

10. Windkraftmaschine nach den Ansprüchen 1 bis 9, dadurch gekennzeichnet, daß das Gehäuse (16) ein symmetrisches, in Draufsicht eiförmiges Profil aufweist.

11. Windkraftmaschine nach den Ansprüchen 1 bis 10, dadurch gekennzeichnet, daß die Windaustrittsöffnung (26) mit profilierten Saugschlitzen (61) versehen ist.

12. Windkraftmaschine nach den Ansprüchen 1 bis 11, dadurch gekennzeichnet, daß die den freien Enden der Rotordreharme (37) zugeordneten Windleitprofile (53) während eines Umlaufes des Rotors (30) zur Erzeugung eines Auftriebs ihren Anstellwinkel verstellend ausgebildet sind.

## Claims

1. Wind power engine with a housing (16) in which a vertical rotor (30) is rotatable about an eccentrically disposed rotor shaft (31), means (32) which can be acted on by the wind, are held on rotary arms (37) of the rotor, can roll in and out about take-up shafts (35) during the rotation of the vertical rotor, and are movable relative to the rotor shaft (31) are associated with the vertical rotor (30), and the housing (16) has a wind-outlet opening (26) on the windward side and a wind inlet opening (25) closable by door leaves (17) and tapering towards the space (58) inside the housing on the lee side, characterized in that the door leaves (17, 48) associated with the wind-inlet opening (25) have aerofoil profiles, the means (32) which can be acted on by wind are provided with wind passage-ways (45) on their regions facing the rotor shaft (31), and the rotary arms (37) of the rotor are provided with wind guide profiles (53) on their outer free ends.

2. Wind power engine according to Claim 1, characterized in that the take-up shafts (35) associated with the rotary arms (37) of the rotor have a circumference which corresponds to 0.25 to 1 times the length to be taken up of the means (32) which can be acted on by wind.

3. Wind power engine according to Claims 1 and 2, characterized in that the means (32) which can be acted on by wind are sails (32) held on the rotor shaft (31) on flexible metal mesh or chain elements (42).

4. Wind power engine according to Claims 1 to 3, characterized in that the inner edges (59) of the sails (32) lie exposed with wind passageways (45) opposite the rotor axis (31).

5. Wind power engine according to Claims 1 to 4, characterized in that the inner surfaces (55) of the door leaves (17, 48) are occupied by laminar sheets (54).

6. Wind power engine according to Claims 1 to 5, characterized in that the laminar sheets (54) are composed of a light, flexible, resilient material and are fixed on one side by a fixing edge (60) to a coating (56) carrying them.

7. Wind power engine according to Claims 1 to 6, characterized in that the ends of the laminar sheets (54) disposed opposite the fixing edges (60) are provided with a toothing (57).

8. Wind power engine according to Claims 1 to 7, characterized in that the door leaves (17, 48) are associated with ion chambers (28).

9. Wind power engine according to Claims 1 to 8, characterized in that a slat (14) is arranged in front of the door leaves (17, 48) of the housing (16).

10. Wind power engine according to Claims 1 to 9, characterized in that the housing (16) has a symmetrical, oval profile in plan.

11. Wind power engine according to Claims 1 to 10, characterized in that the wind-outlet opening (26) is provided with profiled suction slots (61).

12. Wind power engine according to Claims 1 to 11, characterized in that the wind-guide profiles (53) associated with the free ends of the rotary arms (37) of the rotor are formed so that their angle of attack is adjustable during a revolution of the rotor (30) in order to produce a lift.

## Revendications

1. Eolienne comprenant une enveloppe (16) dans laquelle un rotor vertical (30) peut tourner autour d'un axe de rotor excentré (31), cependant que sont associés au rotor vertical (30) des moyens (32) qui peuvent être soumis à l'action du vent, qui peuvent être déplacés par rapport à l'axe (31) du rotor, qui peuvent être enroulés sur des axes d'enroulement (35) et déroulés de ceux-ci pendant la rotation du rotor vertical et qui sont maintenus sur des bras tournants (37) du rotor, et que l'enveloppe (16) présente une ouverture de sortie du vent (26) du côté sous le vent et, du côté au vent, une ouverture d'entrée du vent (25) qui se rétrécit dans la direction du volume intérieur (58) de l'enveloppe et qui peut être fermée par des portes pivotantes (17), caractérisée par le fait que les portes pivotantes (17, 48) qui sont associées à l'ouverture d'entrée du vent (25) sont profilées en forme d'ailes portantes, que les moyens (32) qui peuvent être soumis à l'action du vent sont pourvus de passages (45) destinés au vent dans leurs régions tournées vers l'axe (31) du rotor, et que les bras tournants (37) du rotor sont pourvus à leurs extrémités libres extérieures de profilés de guidage du vent (53).

2. Eolienne selon la revendication 1, caractérisée par le fait que les axes d'enroulement (35) associés aux bras tournants (37) du rotor présentent un pourtour qui correspond à 0,25 à 1 fois la longueur des moyens (32) qui peuvent être soumis à l'action du vent et qu'il s'agit d'enrouler.

3. Eolienne selon les revendications 1 et 2, caractérisée par le fait que les moyens (32) qui peuvent être soumis à l'action du vent sont des voiles (32), celles-ci étant maintenues sur l'axe (31) du rotor sur des éléments flexibles (42) en forme de treillis en fils ou de chaînes.

4. Eolienne selon les revendications 1 à 3, caractérisée par le fait que les bords intérieurs (59) des voiles (32) sont séparés de l'axe (31) du rotor par des passages (45) destinés au vent.

5. Eolienne selon les revendications 1 à 4, caractérisée par le fait que les surfaces intérieures (55) des portes pivotantes (17, 48) sont garnies de lamelles (54).

6. Eolienne selon les revendications 1 à 5, caractérisée par le fait que les lamelles (54) sont constituées par une matière flexible et facile à plier, et qu'elles sont fixées d'un côté par un bord de fixation (60) sur un revêtement (56) qui les porte.

7. Eolienne selon les revendications 1 à 6, caractérisée par le fait que les extrémités des lamelles (54) qui sont opposées aux bords de fixation (60) présentent une denture (57).

8. Eolienne selon les revendications 1 à 7, caractérisée par le fait que des chambres d'ionisation (28) sont associées aux portes pivotantes (17, 48).

9. Eolienne selon les revendications 1 à 8, caractérisée par le fait qu'un bec mobile (14) est monté en amont des portes pivotantes (17, 48) de l'enveloppe (16).

10. Eolienne selon les revendications 1 à 9, caractérisée par le fait que l'enveloppe (16) présente un profil symétrique de forme ovoïde en vue de dessus.

11. Eolienne selon les revendications 1 à 10, caractérisée par le fait que l'ouverture de sortie du vent (26) est pourvue de fentes d'aspiration profilées (61).

12. Eolienne selon les revendications 1 à 11, caractérisée par le fait que les profilés de guidage du vent (53) qui sont associés aux extrémités libres des bras tournants (37) du rotor sont réalisés de façon à pouvoir modifier leur angle d'incidence pendant une révolution du rotor (30) en vue d'engendrer une poussée.
